# EUROPÄISCHE PATENTSCHRIFT

(11) **EP 0 790 489 B1**
(45) Veröffentlichungstag und Bekanntmachung des Hinweises auf die Patenterteilung: **17.05.2000**
(21) Anmeldenummer: 96120019.3
(22) Anmeldetag: 13.12.1996
(51) Int. Cl.: G01D 18/00

(54) **Vorrichtung und Verfahren zur Umschaltung zwischen verschiedenen Betriebsmodi eines Messwertaufnehmers**
Apparatus and method for switching between different operating characteristics of a sensor device
Dispositif et procédé pour commuter entre plusieurs modes opératoires d'un dispositif de mesure

(30) Priorität: 16.02.1996 DE 19605763
(43) Veröffentlichungstag der Anmeldung: 20.08.1997
(73) Patentinhaber: Dr. Johannes Heidenhain GmbH, 83292 Traunreut (DE)
(72) Erfinder: Strasser, Erich, 83308 Trostberg (DE); Wastlhuber, Robert, 84518 Garching/Alz (DE); Hofbauer, Hermann, 83308 Trostberg (DE); Zehentner, Christian, 83317 Teisendorf (DE); Bielski, Steffen, 84518 Garching/Alz (DE); Huber, Helmut, 84518 Garching/Wald a.d. Alz (DE)

(56) Entgegenhaltungen:
- EP-A- 0 660 209
- GB-A- 2 218 213

## Beschreibung

Die vorliegende Erfindung betrifft eine Vorrichtung sowie ein Verfahren zur Umschaltung zwischen verschiedenen Betriebsmodi eines Meßwertaufnehmers gemäß dem Oberbegriff des Anspruchs 1. Insbesondere geeignet ist die erfindungsgemäße Vorrichtung bzw. das erfindungsgemäße Verfahren, wenn ein Positionsmeßsystem als Meßwertaufnehmer eingesetzt wird.

Eine gattungsgemäße Vorrichtung ist beispielsweise aus der GB 2 218 213 A bekannt. Dort ist ein Meßwertaufnehmer in Form eines Füllstandsmessers offenbart, der zwischen einem Meßmodus und einem Kalibriermodus definiert umschaltbar ist. Zur Umschaltung zwischen diesen beiden vorgesehenen Betriebsmodi wird über eine Kalibratoreinheit ein definiertes Umschalt- bzw. Kalibriersignal in Form eines Mode-Wortes an den Meßwertaufnehmer übertragen. Sobald der Meßwertaufnehmer das Umschaltsignal empfängt, schaltet dieser in einen automatischen Kalibriermodus und kalibriert sich automatisch selbst, d.h. im Kalibriermodus ist keine Kommunikation zwischen dem Meßwertaufnehmer und einer nachgeordneten Auswerteeinrichtung vorgesehen. Nach Übertragung des Kalibriersignals erfolgt vielmehr lediglich die automatische Selbstkalibrierung des jeweiligen Meßwertaufnehmers, ohne ggf. gezielt den Meßwertaufnehmer an auswerteseitige Gegebenheiten anzupassen. Desweiteren ermöglichen die beiden Signal-Übertragungsleitungen bzw. das vorgesehene Übertragungsprotokoll zwischen dem Meßwertaufnehmer und der Auswerteeinheit eine Übertragung von Daten in Richtung des Meßwertaufnehmers. Dies ist grundsätzlich nicht bei allen möglichen Übertragungsprotokollen vorgesehen.

Aus der DE 41 29 577 ist ein Meßsystem zur Drehwinkelerfassung bekannt, bei dem eine Modifikation meßsystem-spezifischer Daten durch den Anwender möglich ist. Hierzu umfaßt das Meßsystem einen Datenspeicher, der mit einer Auswerteeinheit über Signal-Übertragungsleitungen verbunden ist; durch zeitweises Zusammenschalten der Meßsystem-Ausgänge bzw. Speicher-Ausgänge mit den Übertragungsleitungen kann das Meßsystem anwenderspezifisch programmiert werden. Für die Datenübertragung wird ein zeitsequentielles Multiplex-Verfahren vorgeschlagen, was eine technisch relativ aufwendige Lösung darstellt. Zudem ist die Synchronisation von Meßsystem und Auswerteeinheit nicht gewährleistet. Die vorgeschlagene Schnittstelle ist ferner nicht universell für verschiedene Meßsysteme einsetzbar, beispielsweise für Meßsysteme, die bereits den eigentlichen Meßwert in Form einer Absolutposition liefern und bei denen der interessierende Meßwert nicht erst in der nachgeordneten Auswerteeinheit erzeugt werden muß.

Eine Vorrichtung sowie ein Verfahren zur synchron-seriellen Datenübertragung zwischen einem Meßwertaufnehmer und einer Verarbeitungseeinheit ist desweiteren aus der EP 0 171 579 bekannt. Hierbei umfaßt die vorgeschlagene Vorrichtung eine Taktsignal- sowie eine Daten-Leitung, über die der Meßwertaufnehmer und eine nachgeordnete Verarbeitungseinheit miteinander verbunden sind; die beiden Signalübertragungsleitungen werden jeweils nur unidirektional betrieben. Eine anwenderspezifische Programmierung des Meßwertaufnehmers, etwa durch Beschreiben und Auslesen von Speichereinheiten, die dem Meßwertaufnehmer zugeordnet sind, ist bei dieser Vorrichtung nicht vorgesehen bzw. nicht möglich.

In der EP 0 660 209 wird aus diesem Grund vorgeschlagen, zumindest eine Signal-Übertragungsleitung zwischen dem Meßwertaufnehmer und der Verarbeitungseinheit bidirektional auszuführen und dem Meßwertaufnehmer eine Reihe von Speicherbereichen zuzuordnen. Die Speicherbereiche können vom Anwender über diese Signal-Übertragungsleitung beschrieben bzw. ausgelesen werden, so daß derart dem Anwender eine Anpassung der Verarbeitungseinheit an spezifische Meßwertaufnehmer-Parameter möglich ist. Die vorgesehenen Speicherbereiche können verschiedenste Parameter des Meßwertaufnehmers, Informationen zu dessen Betriebszustand, Parameter der Verarbeitungseinheit etc. beinhalten. Mit Hilfe einer derartigen Vorrichtung ist nunmehr ein wahlweiser Programmier- bzw. Meßbetrieb des Meßwertaufnehmers möglich. Diese vorteilhafte Lösung erfordert jedoch bestimmte Voraussetzungen seitens der Meßwertaufnehmer, insbesondere eine bidirektionale Signal-Übertragungsleitung zur Verarbeitungseinheit und ist deshalb nicht universell einsetzbar, etwa in Verbindung mit Meßwertaufnehmern, die nur unidirektional betreibbare Takt- und Datenleitungen aufweisen.

Eine weitere Möglichkeit zur Ausgestaltung der Schnittstelle zwischen einem Meßwertaufnehmer und einer nachgeordneten Verarbeitungseinheit ist aus der EP 0 324 067 bekannt. Hierbei sind wiederum dem Meßwertaufnehmer zugeordnete Speicherbausteine vorgesehen, die beschrieben und ausgelesen werden können und in denen Meßwertaufnehmer-Kenndaten abgelegt sind. Auch diese Lösung ist wie die vorab erläuterte Variante nur in Verbindung mit dafür ausgelegten Meßwertaufnehmern und einer entsprechenden Ausgestaltung der Signal-Übertragungsleitungen einsetzbar.

Desweiteren offenbart die US 4,831,380 eine Schnittstelle für Meßwertaufnehmer, bei der durch Detektion eines Referenzsignales die gleichzeitige Übermittlung von Meßwertaufnehmer-Korrekturdaten und Meßdaten zur Verarbeitungseinheit erfolgt. Eine Programmiermöglichkeit für den Meßwertaufnehmer, d.h. etwa die anwenderspezifische Anpassung an bestimmte Anforderungen der Verarbeitungseinheit ist hierbei jedoch ebensowenig vorgesehen wie die definierte Umschaltung zwischen verschiedenen Betriebsmodi des Meßwertaufnehmers.

Aufgabe der vorliegenden Erfindung ist es daher, eine Vorrichtung sowie ein Verfahren zur Umschaltung zwischen verschiedenen Betriebsmodi eines Meßwertaufnehmers zu schaffen, die in Verbindung mit möglichst vielen verschiedenen Meßwertaufnehmer-Systemen zuverlässig arbeitet. Insbesondere soll neben verschiedenen Meßmodi, in denen eine Meßdaten-übertragung an eine nachgeordnete Verarbeitungseinheit in unterschiedlicher Art und Weise erfolgt, eine Programmierung des Meßwertaufnehmers durch den jeweiligen Anwender möglich sein. Ein derartiger Programmier-modus soll z.B. eine Anpassung der Verarbeitungseinheit an bestimmte Parameter des Meßwertaufnehmers mit geringem Aufwand ermöglichen.

Diese Aufgabe wird gelöst durch eine Vorrichtung mit den Merkmalen aus dem kennzeichnenden Teil des Anspruches 1.

Vorteilhafte Ausführungsformen der erfindungsgemäßen Vorrichtung ergeben sich aus den aufgeführten Maßnahmen in den von Anspruch 1 abhängigen Ansprüchen.

Ein Verfahren zur Lösung der angesprochenen Probleme wird durch die kennzeichnenden Merkmale des Anspruches 8 charakterisiert.
Mögliche Ausführungsformen des erfindungsgemäßen Verfahrens ergeben sich aus den aufgeführten Maßnahmen in den von Anspruch 8 abhängigen Ansprüchen.

Durch den erfindungsgemäßen Einsatz einer Vergleicher-Einheit ist nunmehr sichergestellt, daß eine zuverlässige Identifizierung und nachfolgende Umschaltung in den gewünschten Meßwertaufnehmer-Betriebsmodus erfolgt. Hierbei können verschiedenste Betriebsmodi desselben vorgesehen werden, beispielsweise unterschiedliche Meßmodi, in denen Signale unterschiedlicher Form an eine nachgeordnete Verarbeitungseinheit übertragen werden. Daneben kann jedoch auch definiert in einen Programmmiermodus umgeschaltet werden, in dem ein Beschreiben und Auslesen von entsprechenden Speicherbereichen des Meßwertaufnehmers erfolgen kann usw..

Die erfindungsgemäße Vorrichtung bzw. das erfindungsgemäße Verfahren lassen sich dabei zum einen bei herkömmlichen Schnittstellen-Varianten mit unidirektionalen Signalübertragungsleitungen einsetzen, wie sie etwa in der EP 0 171 579 beschrieben werden. Zum anderen können auch Vorrichtungen bzw. Verfahren gemäß der EP 0 660 209 damit optimiert werden. Der universelle Einsatz in Verbindung mit verschiedensten Meßwertaufnehmern ist somit sichergestellt.

Innerhalb eines Programmiermodus ist es möglich, verschiedene bekannte Signalübertragungsverfahren einzusetzen, d.h. die erfindungsgemäße Vorrichtung sowie das erfindungsgemäße Verfahren können diesbezüglich äußerst fllexibel ausgestaltet werden. Die erfindungsgemäße Vorrichtung sowie das erfindungsmäße Verfahren lassen sich ferner in Verbindung mit verschiedensten Ausführungen von Meßwertaufnehmern einsetzen.

Darüberhinaus resultiert als weiterer Vorteil der erfindungsgemäßen Vorrichtung bzw. des erfindungsgemäßen Verfahrens, daß separate Verbindungsleitungen zum Akfivieren der eigentlichen Umschaltung nicht benötigt werden. Die eigentlichen Umschaltsignale können auf den bereits vorhandenen Signal-Übertragungsleitungen übertragen werden. Hierzu können selbstverständlich verschiedenste Signal-Übertragungsleitungen herangezogen werden, wie beispielsweise die Daten- oder Takt-Signalübertragungsleitungen.

Weitere Vorteile sowie Einzelheiten der erfindungsgemäßen Vorrichtung bzw. des erfindungsgemäßen Verfahrens ergeben sich aus der nachfolgenden Beschreibung von Ausführungsbeispielen anhand der beiliegenden Figuren.

Dabei zeigt
- Figur 1: eine schematische Darstellung einer ersten Ausführungsform der erfindungsgemäßen Vorrichtung;
- Figur 2: eine schematische Darstellung einer zweiten Ausführungsform der erfindungsgemäßen Vorrichtung;
- Figur 3: eine schematische Darstellung einer dritten Ausführungsform der erfindungsmäßen Vorrichtung.

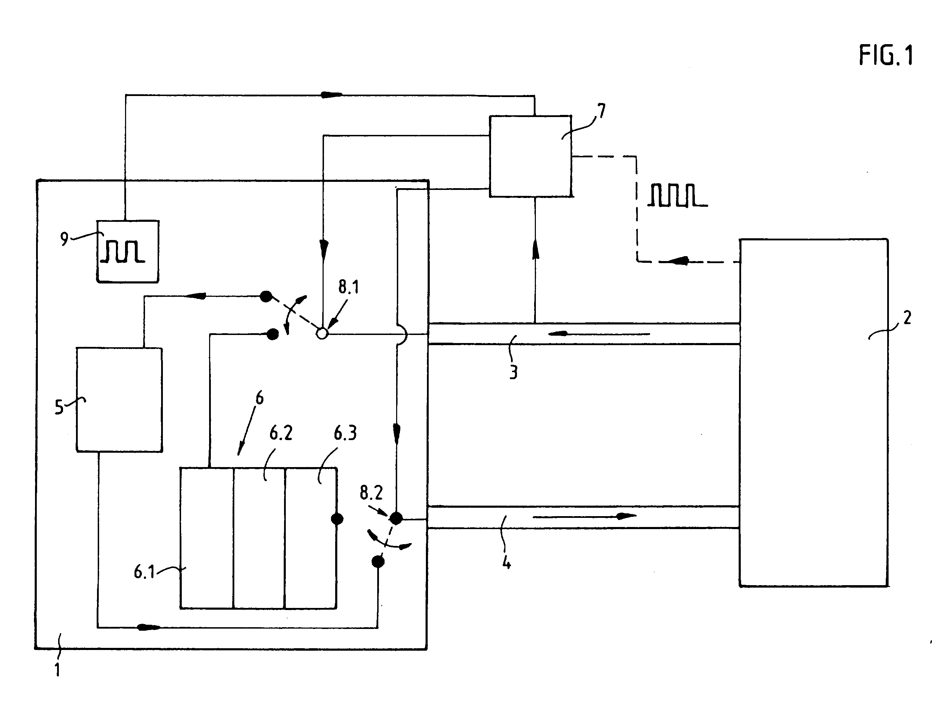

Eine erste Ausführungsform der erfindungsgemäßen Vorrichtung ist in einer schematisierten Darstellung in Figur 1 gezeigt. In Verbindung mit Figur 1 wird im folgenden auch eine Ausführungsform des erfindungsgemäßen Verfahrens erläutert.
Die dargestellte Vorrichtung umfaßt zum einen den Meßwertaufnehmer (1), der im nachfolgend beschriebenen Ausführungsbeispiel als Positionsmeßsystem, respektive als absolutes Winkelmeßsystem, ausgeführt ist. Über zwei unidirektional betriebene Signal-Übertragungsleitungen (3, 4) ist der Meßwertaufnehmer (1) mit einer nachgeordneten Verarbeitungseinheit (2) verbunden. Im Fall des absoluten Winkelmeßsystems entspricht die Verarbeitungseinheit (2) demzufolge beispielsweise einer konventionellen Werkzeugmaschinen-Steuerung.
Zur Erfassung der interessierenden absoluten Winkelstellung ist der Meßwertaufnehmer (1) in bekannter Art und Weise ausgeführt, das heißt durch die lichtelektrische Abtastung einer Codescheibe oder aber mehrerer durch Untersetzungsgetriebe miteinander verbundener Codescheiben lassen sich analoge Abtastsignale erzeugen. Diese werden in einer Abtasteinheit verstärkt und in Digitalsignale in Form eines binären Datenwortes umgewandelt, welches die absolute Winkelstellung angibt. Die einzelnen Komponenten zur Erzeugung der zu übertragenden Positionsdaten sind in Figur 1 nicht im einzelnen dargestellt, mit dem Bezugszeichen (5) wird vielmehr die Gesamtheit der einzelnen Elemente der Meßwert-Erzeugungseinheit (5) bezeichnet. An deren Ausgang liegt bereits das binäre Datenwort an, das die absolute Winkelposition angibt. Über die gewählte schematisierte Darstellung soll zudem veranschaulicht werden, daß auch das jeweilige Verfahren zur Meßwert-Erzeugung in keiner Weise einschränkend im Zusammenhang mit der vorliegenden Erfindung anzusehen ist. Alternativ könnten auch beliebige andere Signalerzeugungsverfahren in Verbindung mit der erfindungsmäßen Vorrichtung bzw. dem erfindungsgemäßen Verfahren zum Einsatz kommen.

Die Übertragung der Signale von der Meßwert-Erzeugungseinheit (5) über die zwei Signal-Übertragungsleitungen (3, 4) zur nachgeordneten Verarbeitungseinheit (2) erfolgt in einem Meßmodus in bekannter Art und Weise, wie dies beispielsweise in der EP 0 171 579 beschrieben ist. Hierbei werden die beiden Signal-Übertragungsleitungen (3, 4) unidirektional betrieben, d.h. es ist eine Takt- (3) und eine Datenleitung (4) vorgesehen. Durch die Übermittlung definierter Taktsignale von der Verarbeitungseinheit (2) über die Taktleitung (3) an die Meßwert-Erzeugungseinheit (5) wird die serielle Übertragung von Meßdaten auf der Datenleitung (4) in Richtung Verarbeitungseinheit (2) entsprechend synchronisiert.
Der dargestellte Meßwertaufnehmer (1) umfaßt desweiteren einen Speicherbaustein (6) mit mehreren separaten Speicherbereichen (6.1, 6.2, 6.3). Die einzelnen Speicherbereiche (6.1, 6.2, 6.3) sind hierbei für verschiedene Parameter-Kategorien reserviert und können vom jeweiligen Anwender in einem Programmiermodus definiert beschrieben und ausgelesen werden. Wie in der EP 0 660 209 detailliert ausgeführt, können in den einzelnen Speicherbereichen (6.1, 6.2, 6.3) anwenderspezifische Parameter ebenso abgelegt werden wie spezifische Daten des Meßwertaufnehmer-Herstellers, Korrekturdaten des Meßwertaufnehmers (1), Betriebsart-Parameter usw.. Zur Programmierung bzw. definierten Veränderung dieser Speicherbereiche (6.1, 6.2, 6.3) ist im dargestellten Ausführungsbeispiel nunmehr vorgesehen, daß neben einem Meßmodus, in dem eine Meßdaten-Übertragung zur Verarbeitungseinheit (2) erfolgt, desweiteren ein Programmiermodus realisierbar ist bzw. für den Anwender zur Verfügung steht. In einem derartigen Programmiermodus kann beispielsweise die Betriebsart des Meßwertaufnehmers (1), z.B. die Angabe der Drehrichtung eines Winkelmeßsystemes, definiert vorgegeben werden, das Auslesen von Parametern des Meßwertaufnehmer-Herstellers erfolgen etc..
Um bei der in Figur 1 dargestellten Ausführungsform mit jeweils unidirektionalen Signal-Übertragungsleitungen (3, 4) einen derartigen Programmier-modus zu ermöglichen, ist eine Vergleicher-Einheit (7) innerhalb der erfindungsgemäßen Vorrichtung vorgesehen. Die Aufgabe der Vergleicher-Einheit (7) besteht darin, laufend die Signale zu erfassen, die über mindestens eine der beiden Signal-Übertragungsleitungen (3, 4) übertragen werden bzw. dort anliegen. Die erfaßten Signale werden von der Vergleicher-Einheit (7) laufend mit vorgegebenen Referenzsignalen verglichen, so daß derart eine Identifikation des jeweils aktivierten bzw. gewünschten Betriebsmodus möglich ist. Je nach Art des übertragenen Signales erkennt die Vergleicher-Einheit (7) anhand der zur Verfügung stehenden Referenz-Signale demzufolge den vom Anwender gewünschten Betriebsmodus und aktiviert die entsprechenden Umschaltmittel (8.1, 8.2), um zwischen den mindestens zwei Betriebsmodi umzuschalten. In Abhängigkeit von der Anzahl vorgesehener Betriebsmodi können hierbei auch unterschiedlich viele Referenzsignale bzw. -Signalarten erforderlich sein. Bei lediglich zwei gewünschten Betriebsmodi hingegen reicht in einer möglichen Ausführungsform ein einziges Referenzsignal zur Erkennung des gewünschten Umschaltzeitpunktes aus; sobald die Vergleichereinheit dieses Signal erkennt, wird jeweils in den anderen der beiden Betriebsmodi umgeschaltet.
Ferner sei an dieser Stelle noch einmal darauf hingewiesen, daß selbstverständlich auch andere Signal-Übertragungsleitungen herangezogen werden können, um die Umschaltung zwischen verschiedenen Betriebsmodi in der beschriebenen Art und Weise sicherzustellen.
Die Wahl des gerade gewünschten Betriebsmodus erfolgt durch den Anwender über die Verarbeitungseinheit (2), die hierfür eine geeignete Schnittstelle, z.B. in Form einer Tastatur, umfaßt. Daneben weist die Verarbeitungseinheit (2) vorzugsweise auch eine Anzeigeeinheit auf, welche in Figur 1 ebenfalls nicht dargestellt ist. In der Regel wird der Anwender vor dem Ersteinsatz auf den möglichen Programmier-Modus zurückgreifen, um derart die Speicherbereiche (6.1, 6., 6.3) zu verändern, auszulesen etc.. Ebenso kann der Programmiermodus zur Fehlerdiagnose vorteilhaft eingesetzt werden.

In einer möglichen Ausführungsform der erfindungsgemäßen Vorrichtung bzw. des erfindungsgemäßen Verfahrens ist es beispielsweise möglich, den Meßwertaufnehmer (1) derart zu betreiben, daß er sich nach dem Einschalten automatisch im Programmiermodus befindet und der jeweilige Anwender dann die gewünschte Programmierung des Meßwertaufnehmers (1) vornimmt. Nach der durchgeführten Programmierung erfolgt die Umschaltung in den Meßmodus, wozu wiederum die vorgesehene Vergleicher-Einheit (7) anhand eines Referenz-Signales den anschließend gewünschten Betriebsmodus identifiziert und die erforderlichen Umschaltmittel aktiviert. Es ergeben sich demzufolge eine Reihe möglicher Ausführungsformen der erfindungsgemäßen Vorrichtung bzw. des erfindungsgemäßen Verfahrens.

In der dargestellten Ausführungsform der Figur 1 ist die Vergleicher-Einheit (7) so ausgebildet, daß damit ein Erfassen der übertragenen Signalfrequenz auf mindestens einer Signal-Übertragungsleitung (3) möglich ist. Als Referenz-Signal steht demzufolge eine Referenzfrequenz-Signalfolge zur Verfügung, mit der das aktuell erfaßte Signal verglichen wird. Bei der in Figur 1 dargestellten Ausführungsform überwacht die Vergleichereinheit (7) die an der Taktsignal-Leitung (3) anliegenden Signale und vergleicht diese mit einem Referenz-Signal. Erkennt die Vergleicher-Einheit (7) über die gerade registrierte Signalfrequenz, daß nunmehr keine Synchronisierungs-Daten auf der Takt-Leitung (3) mehr übertragen werden, da eine von der Referenz-Frequenz abweichende Signalform vorliegt, so aktiviert die Vergleicher-Einheit (7) geeignet ausgeführte Umschaltmittel (8.1, 8.2), über die eine Umschaltung in den Programmier-Modus erfolgt.

Zum Identifizieren des Betriebsmodus kann beispielsweise eine Referenzfrequenz vorgegeben werden; weicht die detektierte Frequenz um einen bestimmten Betrag von dieser Referenzfrequenz ab, so erfolgt die Umschaltung in den jeweils anderen Betriebsmodus. Prinzipiell könnten derart selbstverständlich auch mehr als zwei unterschiedliche Betriebsmodi vorgesehen werden. Ebenso ist es möglich, auch die Identifikation des jeweiligen Betriebsmodus alternativ zum beschriebenen Frequenzvergleich der anliegenden Signale auszuführen. So kann beispielsweise auch ein Umschaltsignal auf einer Datenleitung erzeugt werden, in dem auf Seiten der Verarbeitungseinheit ein Widerstand bzw. eine Last auf diese Datenleitung aufgeschaltet wird. Eine entsprechende Veränderung des Gleichstrom- oder des Gleichspannungspegels auf dieser Datenleitung wird über die Vergleichereinheit erkannt und ein dem veränderten Pegel zugeordneter Betriebsmodus des Meßwertaufnehmers identifiziert bzw. aktiviert. Entsprechend kann ein Zurückschalten in den ursprünglichen Betriebsmodus erfolgen, indem ein derartiger Widerstand wieder von dieser Datenleitung abgeschaltet wird. Selbstverständlich lassen sich auf diese Art und Weise ebenfalls mehrere verschiedene Betriebszustände definiert identifizieren und aktivieren.

Nachdem derart eine gewünschte Änderung des Betriebsmodus erfaßt wurde, wird anschließend die Takt-Leitung (3) und die Datenleitung (4) jeweils so umgeschaltet, daß ein Beschreiben und/oder Auslesen der Speicherbereiche (6.1, 6.2, 6.3) des Speicherbausteins (6) möglich ist. Die von der Vergleicher-Einheit (7) hierzu aktivierbaren Umschaltmittel (8.1, 8.2) sind in Figur 1 in schematisierter Form als Schalter dargestellt. Selbstverständlich können sowohl diese Elemente der erfindungsgemäßen Vorrichtung als auch die ferner erläuterten Komponenten in vielfältigsten Ausführungsformen soft- und/oder hardwaremäßig realisiert werden. Über die gewählte Darstellung soll lediglich die prinzipielle Signalverarbeitung innerhalb der erfindungsgemäßen Vorrichtung bzw. beim erfindungsgemäßen Verfahren veranschaulicht werden.
Das für die Vergleicher-Einheit (7) erforderliche Referenzsignal wird in der dargestellten Ausführungsform von einer Oszillatorstufe (9) erzeugt, die dem Meßwertaufnehmer (1) zugeordnet ist. Alternativ hierzu ist in Figur 1 über die Verbindung zur Verarbeitungseinheit (2) die Möglichkeit angedeutet, ein derartiges Referenzsignal extern von der Verarbeitungseinheit (2) erzeugen zu lassen und der Vergleicher-Einheit zuzuführen.

Die erfindungsgemäße Ausgestaltung der dargestellten Vorrichtung bzw. das erfindungsgemäße Verfahren ermöglicht somit eine definierte Umschaltung zwischen verschiedenen Betriebsmodi des Meßwertaufnehmers (1) durch den Anwender über die Verarbeitungseinheit (2). Hierbei identifiziert die vorgesehene Vergleichereinheit (7) jeweils durch Vergleichen mit einem Referenzsignal den gewünschten Betriebsmodus und aktiviert die Umschaltmittel (8.1, 8.2), die dann die erforderlichen Änderungen veranlassen.

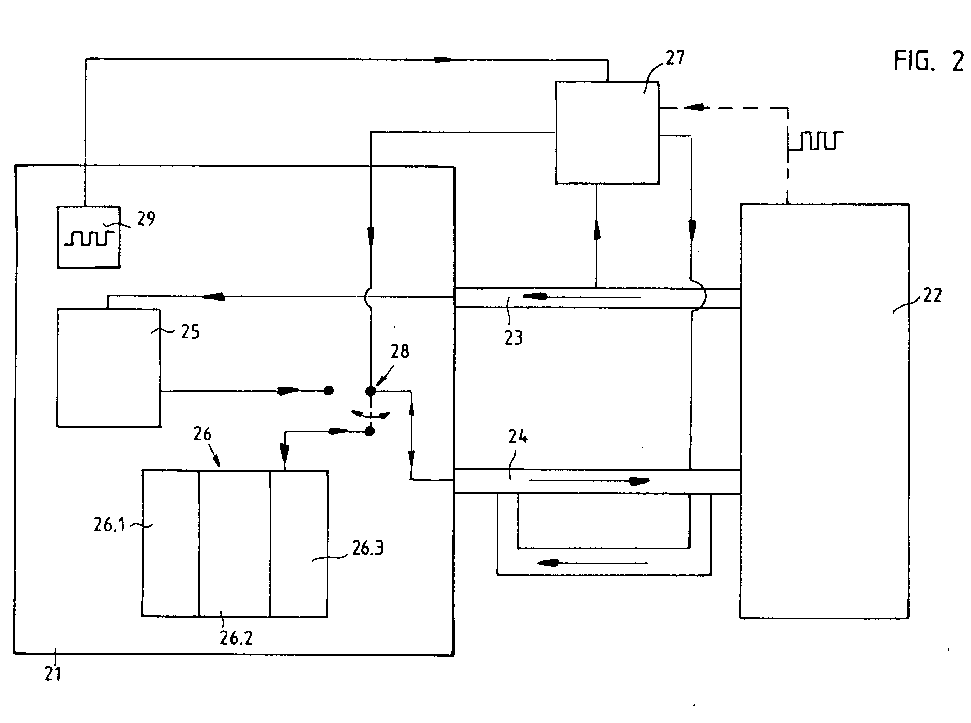

Die für einen Programmiermodus erforderliche Datenübertragung auf der Taktsignal-Leitung (3) zwischen der Verarbeitungseinheit (2) und dem Meßwertaufnehmer (1) bzw. dem Speicherbaustein (6) erfolgt in bekannter Art und Weise durch geeignetes Verschlüsseln oder Codieren der übertragenen Signale. Hierfür kommen bekannte Modulationsverfahren wie Pulscode-, Pulsphasen- oder Frequenzmodulationsverfahren etc. in Betracht. So kann beispielsweise im Fall der Frequenzmodulation der übertragenen Signale im Programmier-Modus die Signalübertragung in Richtung des Meßwertaufnehmers im Frequenzbereich zwischen 1,5MHz und 3MHz erfolgen.
Eine weitere Ausführungsform der erfindungsgemäßen Vorrichtung bzw. des erfindungsgemäßen Verfahrens sei nunmehr anhand der Figur 2 erläutert. Dargestellt ist hierbei erneut ein Meßwertaufnehmer (21) sowie eine nachgeordnete Verarbeitungseinheit (22), welche durch Signal-Übertragungsleitungen (23, 24) miteinander verbunden sind. Der Meßwertaufnehmer (21) ist wiederum als absolutes Positionsmeßsystem ausgeführt und entspricht im grundsätzlichen Aufbau dem des vorab erläuterten Ausführungsbeispieles. Hierbei umfaßt der Meßwertaufnehmer (21) unter anderem eine schematisiert dargestellte Meßwerterzeugungseinheit (25) sowie einen Speicherbaustein (26) mit verschiedenen Speicherbereichen (26.1, 26.2, 26.3). Ebenso wie im vorab beschriebenen Ausführungsbeispiel ist ferner eine Vergleicher-Einheit (27) innerhalb der erfindungsgemäßen Vorrichtung angeordnet, die ein definiertes Umschalten zwischen den verschiedenen Betriebsmodi sicherstellt, indem durch Vergleichen der an mindestens einer Signal-Übertragungsleitung (23) anliegenden Signale mit Referenzsignalen der jeweils aktivierte Betriebsmodus identifiziert wird.
Im Gegensatz zur erläuterten Ausführungsform der Figur 1 ist nunmehr eine der beiden Signal-Übertragungsleitungen (24) als birektional betreibbare Signal-Übertragungsleitung (24) ausgeführt, was in schematisierter Form in Figur 2 angedeutet ist. Sobald die Vergleicher-Einheit (27) erkennt, daß die an einer der beiden Signal-Übertragungsleitungen (23) anliegenden Signale von einem vorgegebenen Referenz-Signal abweichen, wird ein Umschaltmittel (28) aktiviert. Hierbei wird vom Umschaltmittel (28) die Verbindung zwischen der Verarbeitungseinheit (22) und dem beschreib- und auslesbaren Speicherbaustein (26) innerhalb des Meßwertaufnehmers (21) hergestellt. Über die bidirektional arbeitende Signal-Übertragungsleitung (24) erfolgt dann die anwenderspezifische Programmierung des Speicherbausteins (26) bzw. das Beschreiben und Auslesen der unterschiedlichen Speicherbereiche (62.1, 26.2, 26.3).

Wie im vorab erläuterten Ausführungsbeispiel kann wiederum vorgesehen werden, das Referenzsignal für die Vergleicher-Einheit (27) über eine Oszillatorstufe (29) zu erzeugen, die dem eigentlichen Meßwertaufnehmer (21) zugeordnet ist. Daneben besteht aber auch die Möglichkeit, ein externes Referenzsignal über die Verarbeitungseinheit (22) zuzuführen, was in Figur 2 ebenfalls angedeutet ist.

Im weiteren Aufbau entspricht dieses Ausführungsbeispiel dem der Figur 1. Insbesondere sei auch bei dieser Ausführungsform darauf hingewiesen, daß es eine Reihe von Möglichkeiten gibt, sowohl die schematisch dargestellte Vergleicher-Einheit (27) als auch die Umschaltmittel (28) hard- und/oder softwaremäßig auszuführen. Anhand der gewählten Darstellung sollte lediglich das erfindungsgemäße, funktionelle Zusammenwirken erläutert werden, das die verschiedenen Betriebsmodi des Meßwertaufnehmers ermöglicht; eine Beschränkung auf bestimmte Ausführungsformen der einzelnen Komponenten ist darin nicht zu sehen.

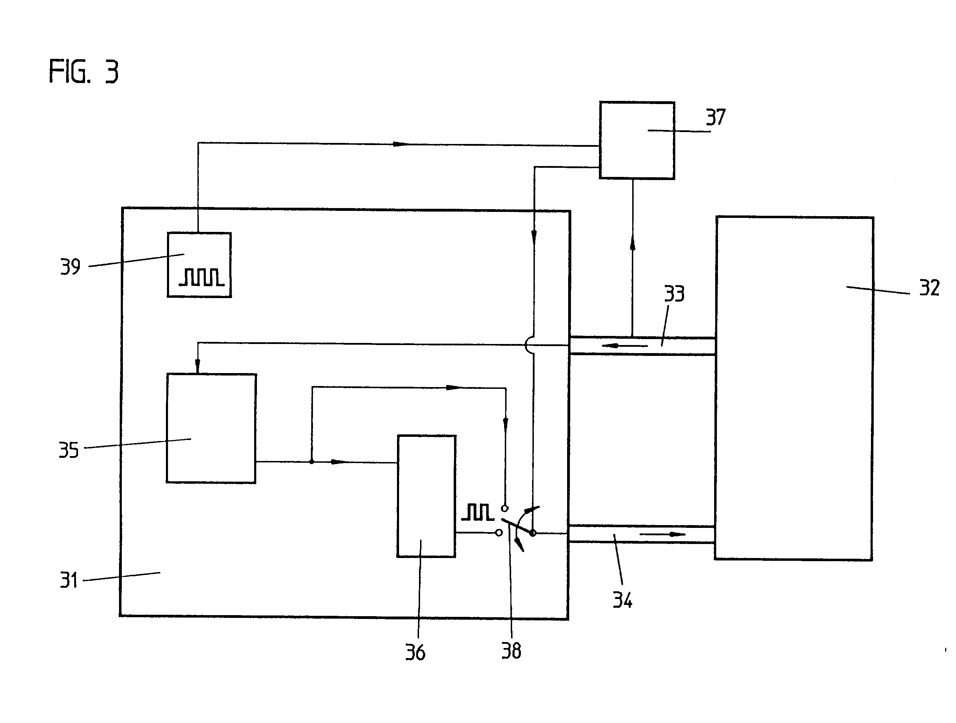

Eine dritte Ausführungsform der erfindungsgemäßen Vorrichtung bzw. des erfindungsgemäßen Verfahrens sei nachfolgend anhand der schematisierten Darstellung in Figur 3 erläutert. Während in den beiden vorab beschriebenen Ausführungsbeispielen jeweils eine Umschaltung zwischen einem Meßmodus und einem Programmiermodus eines Meßwertaufnehmers erfolgte, ist im dritten Ausführungsbeispiel vorgesehen, zwischen verschiedenen Meßmodi des Meßwertaufnehmers (31) definiert umzuschalten. Die beiden Meßmodi unterscheiden sich dabei in der Form der an die nachgeordnete Auswerteeinheit (32) übertragenen Signale. So werden in einem ersten Meßmodus analoge Signale übertragen, während im zweiten Meßmodus eine Übertragung von digitalen Signalen erfolgt. Eine derartige Umschaltmöglichkeit zwischen verschiedenen Ausgangssignalen eines als Positionsmeßeinrichtung ausgebildeten Meßwertaufnehmers (31) erweist sich beispielsweise zur Fehlerdiagnose als vorteilhaft, wenn von den üblicherweise rechteckförmigen Ausgangssignalen zu diesem Zweck auf die analogen Abtastsignale umgeschaltet werden kann. Diese können dann nachfolgend in einer Verarbeitungseinheit (32) analysiert werden, um eventuell vorliegende Fehlfunktionen des Meßwertaufnehmers (31) zu diagnostizieren.
Selbstverständlich lassen sich die erwähnten Maßnahmen auch je nach Anforderung kombinieren, d.h. es ist erfindungsgemäß auch möglich, sowohl eine Umschaltung zwischen verschiedenen Meßmodi als auch zwischen Meßmodi- und Programmiermodus vorzusehen usw..
Im Ausführungsbeispiel der Figur 3 ist seitens des Meßwertaufnehmers (31), der beispielsweise wiederum als Positionsmeßeinrichtung ausgebildet ist, eine Meßwert-Erzeugungseinheit (35) vorgesehen. Über diese können mittels der lichtelektrischen Abtastung einer oder mehrerer Codescheiben analoge Abtastsignale erzeugt werden, die zur absoluten Positionsbestimmung zweier zueinander beweglicher Objekte dienen. Grundsätzlich kann die Meßwert-Erzeugungseinheit (35) auch anders ausgebildet sein, beispielsweise zur inkrementalen Positionsbestimmung durch die lichtelektrische oder magnetische Abtastung einer periodischen Maßstabteilung etc. Über die Meßwert-Erzeugungseinheit (35) werden demzufolge Analogsignale erzeugt, welche innerhalb des Meßwertaufnehmers (31) auf eine Signalverarbeitungsstufe (36) gelangen. Die vorgesehene Signalverarbeitungsstufe (36) dient zur Umwandlung der Analogsignale in Digitalsignale, d.h. beispielsweise in entsprechende Ausgangssignale in Rechteckform. Über eine Signal-Übertragungsleitung (34) werden die digitalen Ausgangssignale an die nachgeordnete Verarbeitungseinheit (32) übergeben. Neben der Signal-Übertragungsleitung (34) zur Übertragung der Daten an die nachfolgende Verarbeitungseinheit ist eine weitere Signal-Übertragungsleitung (33) vorgesehen, über die analog zum ersten Ausführungsbeispiel eine Übermittlung von Taktsignalen an die Meßwert-Erzeugungseinheit (35) erfolgt, um den Datentransfer geeignet zu synchronisieren.
Erfindungsgemäß ist nunmehr neben einem ersten Meßmodus, in dem digitale Ausgangssignale an die Verarbeitungseinheit (32) übergeben werden, mindestens ein zweiter Meßmodus des Meßwertaufnehmers (31) vorgesehen, der eine Übergabe der analogen Abtastsignale an die Verarbeitungseinheit (32) ermöglicht. Hierzu werden die entsprechenden Analogsignale zwischen der Meßwert-Erzeugungseinheit (35) und der Signalverarbeitungsstufe (36) abgegriffen. Zwischen der Signal-Übertragungsleitung (34) und den beiden Signal-Leitungen auf Seiten des Meßwertaufnehmers (31), an denen die Analog- bzw. Digitalsignale anliegen, ist ein geeignetes Umschaltmittel (38) angeordnet, so daß zwischen ausgangsseitig anliegenden Analog- oder Digitalsignalen gewählt werden kann, die an die Verarbeitungseinheit (32) übergeben werden.
Die entsprechende Umschaltung zwischen den unterschiedlichen Meßmodi erfolgt analog zu den beiden vorab erläuterten Ausführungsbeispielen. Es ist wiederum eine Vergleicher-Einheit (37) vorgesehen, die so ausgebildet ist, daß damit ein Erfassen der auf der zweiten Signal-Übertragungsleitung (33) anliegenden Signalfrequenz möglich ist. Die anliegende Signalfrequenz wird dabei wie vorab erläutert stets mit einem Referenzsignal verglichen, das von einer Oszillatorstufe (39) erzeugt wird, welche dem Meßwertaufnehmer (31) zugeordnet ist. Jedem der beiden Meßmodi ist wiederum eine definierte Referenzfrequenz zugeordnet, so daß beim Erkennen einer derartigen Referenzfrequenz über die Umschaltmittel (38) auf den entsprechenden Meßmodus umgeschaltet werden kann.
Aufgrund der erfindungemäßen Maßnahmen ist demzufolge sichergestellt, daß keine separaten Verbindungsleitungen zwischen der Verarbeitungseinheit (32) und dem Meßwertaufnehmer (31) erforderlich sind, um die gewünschte Umschaltung zwischen verschiedenen Betriebsmodi zu ermöglichen. Selbstverständlich zeigt das dargestellte Ausführungsbeispiel in Figur 3 nur eine mögliche Variante von Meßwertaufnehmern, in dem eine derartige Umschaltung möglich ist. Darüberhinaus können die erfindungsgemäßen Maßnahmen aber auch in anderen Meßwertaufnehmern geeignet abgewandelt eingesetzt werden.

## Patentansprüche

1. Vorrichtung zur Datenübertragung zwischen einem Meßwertaufnehmer (1; 21; 31) und einer Verarbeitungseinheit (2; 22; 32), die durch mehrere Signal-Übertragungsleitungen (3, 4; 23, 24; 33, 34) miteinander verbunden sind und die Vorrichtung ferner eine Vergleichereinheit (7; 27; 37) umfaßt, die eine Umschaltung zwischen verschiedenen Betriebsmodi ermöglicht,
dadurch gekennzeichnet, daß
die Vergleichereinheit (7; 27; 37) zu diesem Zweck eine Signalübertragungsleitung (3; 23; 33) überwacht, auf der eine Übertragung von Taktsignalen von der Verarbeitungseinheit (2; 22; 32) in Richtung des Meßwertaufnehmers (1; 21; 31) erfolgt, um eine Datenübertragung auf einer anderen Signal-Übertragungsleitung (4; 24; 34) zu synchronisieren und als Umschaltsignal in den gewünschten anderen Betriebsmodus ein von der Verarbeitungseinheit (2; 22; 32) übertragenes Signal mit einer bestimmten Signalfrequenz dient, das von der Frequenz der ansonsten auf der überwachten Signalübertragungsleitung (3; 23; 33) übertragenen Taktsignale abweicht und die Vergleichereinheit (7; 27; 37) ferner derart ausgebildet ist, daß über das laufende Erfassen der aktuellen Signalfrequenz auf der überwachten Signalübertragungsleitung (3; 23; 33) und dem Vergleich mit einem Referenzsignal eine Identifikation des durch die registrierte Signalfrequenz vorgegebenen Betriebsmodus erfolgt und ferner Umschaltmittel (8.1, 8.2; 28; 38) vorgesehen sind, die von der Vergleichereinheit (7; 27; 37) aktivierbar sind und über die eine Umschaltung in einen anderen Betriebsmodus erfolgt.

2. Vorrichtung nach Anspruch 1, dadurch gekennzeichnet, daß der Meßwertaufnehmer (1; 21) wahlweise in mindestens zwei verschiedenen Betriebsmodi betreibbar ist, worunter mindestens ein Meßmodus sowie mindestens ein Programmiermodus ist, der ein Beschreiben und/oder Auslesen von Speicherbereichen (6.1, 6.2, 6.3; 26.1, 26.2, 26.3) eines Speicherbausteines (6; 26) ermöglicht, welcher dem Meßwertaufnehmer (1; 21) zugeordnet ist.

3. Vorrichtung nach Anspruch 2, dadurch gekennzeichnet, daß mit der Vergleichereinheit (7; 27) verbundene (8.1, 8.2; 28) Umschaltmittel vorgesehen sind, die je nach identifiziertem Betriebsmodus aktivierbar sind, um entweder dem Meßwertaufnehmer (1; 21) zugeordnete Speicherbereiche (6.1, 6.2, 6.3; 26.1, 26.2, 26.3) eines Speicherbausteines (6; 26) zu beschreiben und/oder auszulesen oder Meßdaten vom Meßwertaufnehmer (1; 21) zur Verarbeitungseinheit (2; 22) zu übertragen.

4. Vorrichtung nach Anspruch 1, dadurch gekennzeichnet, daß eine Oszillatorstufe (9; 29) im Meßwertaufnehmer (1; 21) angeordnet ist, die das Referenzsigal erzeugt, welches der Vergleichereinheit (7; 27; 37) zum Vergleich mit der aktuell erfaßten Signalfrequenz auf der überwachten Signalübertragungsleitung (3; 23; 33) zuführbar ist.

5. Vorrichtung nach Anspruch 2, dadurch gekennzeichnet, daß die Übermittlung von Daten zwischen dem Meßwertaufnehmer (1; 21) und der Auswerteeinheit (2; 22) im Programmier-Modus über eine in diesem Betriebsmodus bidirektional betreibbare Datenleitung (24) erfolgt.

6. Vorrichtung nach Anspruch 2, dadurch gekennzeichnet, daß
- im Meßmodus die beiden Signal-Übertragungsleitungen (3, 4) unidirektional betreibbar sind, wobei auf einer Taktleitung (3) eine Übertragung definierter Taktsignale von der Auswerteeinheit (2) zum Meßwertaufnehmer (1) erfolgt und auf einer Datenleitung (4) eine Übertragung von Meßdaten vom Meßwertaufnehmer (1) zur Auswerteinheit (2) erfolgt, während
- im Programmiermodus über die Datenleitung (4) ein Beschreiben und/oder Auslesen eines Speicherbausteines (6) möglich ist, der dem Meßwertaufnehmer (1) zugeordnet ist.

7. Vorrichtung nach Anspruch 1, dadurch gekennzeichnet, daß der Meßwertaufnehmer eine Signalverarbeitungsstufe (36) umfaßt, die Analogsignale in digitale Ausgangssignale umwandelt und Umschaltmittel (38) aufweist, die eine Umschaltung zwischen unterschiedlichen Meßmodi ermöglicht, von denen einer eine Übertragung der Analogsignale zur nachgeordneten Verarbeitungseinheit (32) vorsieht während der andere eine Übertragung der von der Signalverarbeitungsstufe (36) erzeugten digitalen Ausgangssignale zur nachgeordneten Verarbeitungseinheit vorsieht.

8. Verfahren zur Datenübertragung zwischen einem Meßwertaufnehmer (1; 21; 31) und einer Verarbeitungseinheit (2; 22; 32), die durch mehrere Signal-Übertragungsleitungen (3, 4; 23, 24; 33, 34) miteinander verbunden sind, wobei über eine Vergleichereinheit (7; 27; 37) eine Umschaltung zwischen verschiedenen Betriebsmodi möglich ist,
dadurch gekennzeichnet, daß
die Vergleichereinheit (7; 27; 37) zu diesem Zweck eine Signalübertragungsleitung (3; 23; 33) überwacht, auf der Taktsignale von der Verarbeitungseinheit (2; 22; 32) in Richtung des Meßwertaufnehmers (1; 21; 31) übertragen werden, um eine Datenübertragung auf einer anderen Signalübertragungsleitung (4; 24; 34) zu synchronisieren und als Umschaltsignal in den gewünschten anderen Betriebsmodus von der Verarbeitungseinheit (2; 22; 32) ein Signal mit einer bestimmten Signalfrequenz übertragen wird, das von der Frequenz der ansonsten auf dieser Signalübertragungsleitung (3; 23; 33) übertragenen Taktsignale abweicht und die Vergleichereinheit (7; 27; 37) über das laufende Erfassen der aktuellen Signalfrequenz und und dem Vergleich mit einem Referenzsignal den durch die registrierte Signalfrequenz vorgegebenen Betriebsmodus identifiziert und Umschaltmittel (8.1, 8.2; 28; 38) aktiviert, wenn eine Umschaltung in den anderen Betriebsmodus erfolgen soll.

9. Verfahren nach Anspruch 8, dadurch gekennzeichnet, daß einer erster der beiden Betriebsmodi ein Meßmodus ist, in dem eine Übertragung von Meßdaten vom Meßwertaufnehmer (1; 21) zur Auswerteeinheit (2; 22) erfolgt und ein zweiter Betriebsmodus ein Programmiermodus ist, der ein Beschreiben und/oder Auslesen eines Speicherbausteines (6; 26) im Meßwertaufnehmer (1; 21) ermöglicht.

10. Verfahren nach Anspruch 8, dadurch gekennzeichnet, daß über eine Oszillatorstufe (9; 29) im Meßwertaufnehmer (1; 21) das Referenzsignal erzeugt wird, das der Vergleichereinheit (7; 27; 37) zum Vergleich mit der aktuell registrierten Signalfrequenz zugeführt wird.

11. Verfahren nach Anspruch 9, dadurch gekennzeichnet, daß im Programmier-Modus Signale zwischen dem Meßwertaufnehmer (1; 21) und der Auswerteeinheit (2; 22) über eine in diesem Betriebsmodus bidirektionel betreibbare Datenleitung (4; 24) übermittelt werden.

12. Verfahren nach Anspruch 8, dadurch gekennzeichnet, daß
- im Meßmodus die beiden Signal-Übertragungsleitungen (3, 4) unidirektional betrieben werden, wobei auf einer Taktleitung (3) definierte Taktsignale von der Auswerteeinheit (2) zum Meßwertaufnehmer (1) übertragen werden und auf einer Datenleitung (4) Meßdaten vom Meßwertaufnehmer (1) zur Auswerteeinheit (2) übertragen werden, während
- im Programmiermodus über die Datenleitung (4) ein Speicherbaustein (6) beschrieben und/oder ausgelesen wird, der dem Meßwertaufnehmer (1) zugeordnet ist.

13. Verfahren nach Anspruch 8, dadurch gekennzeichnet, daß eine Umschaltung zwischen mindestens zwei verschiedenen Meßmodi des Meßwertaufnehmers (31) möglich ist, wobei in einem ersten Meßmodus Analogsignale zur nachgeordneten Verarbeitungseinheit (32) vom Meßwertaufnehmer (31) zur Auswerteeinheit (32) übertragen werden und in einem zweiten Meßmodus Digitalsignale zur nachgeordneten Verarbeitungseinheit (32) übertragen werden.

## Claims

1. Apparatus for data transmission between a sensor device (1; 21; 31) and a processing unit (2; 22; 32) which are connected together by a plurality of signal-transmission lines (3, 4; 23, 24; 33, 34) and furthermore the apparatus comprises a comparator unit (7; 27; 37) which makes possible switching between different operating modes,
characterised in that
the comparator unit (7; 27; 37) monitors a signal transmission line (3; 23; 33) for this purpose, on which line transmission of timing signals from the processing unit (2; 22; 32) in the direction of the sensor device (1; 21; 31) is effected in order to synchronise data transmission to another signal transmission line (4; 24; 34), and a signal, transmitted from the processing unit (2; 22; 32), with a specific signal frequency serves as a switching signal into the desired other operating mode, which signal deviates from the frequency of the timing signals which are otherwise transmitted on the monitored signal transmission line (3; 23; 33) and furthermore the comparator unit (7; 27; 37) is configured such that, via the continuous detection of the current signal frequency on the monitored signal transmission line (3; 23; 33) and by comparison with a reference signal, an identification of the operating mode, which is preset by the recorded signal frequency, is produced and furthermore switching means (8.1; 8.2; 28; 38) are provided which can be activated by the comparator unit (7; 27; 37) and via which switching to another operating mode results.

2. Apparatus according to claim 1,
characterised in that
the sensor device (1; 21) can be actuated optionally in at least two different operating modes, amongst which there is at least one measuring mode and at least one programming mode which enables writing-on and/or a readout of memory regions (6.1, 6.2, 6.3; 26.1, 26.2, 26.3) of a memory component (6; 26) which is assigned to the sensor device (1; 21).

3. Apparatus according to claim 2,
characterised in that
switching means (8.1, 8.2; 28) are provided which are connected to the comparator unit (7; 27) and can be activated in accordance with the identified operating mode in order either to write-on and/or to read out memory regions (6.1, 6.2, 6.3; 26.1, 26.2, 26.3) of a memory component (6, 26) which are assigned to the sensor device (1; 21) or to transmit measuring data from the sensor device (1; 21) to the processing unit (2; 22).

4. Apparatus according to claim 1,
characterised in that
an oscillator stage (9; 29) is arranged in the sensor device (1; 21) and produces the reference signal which can be supplied to the comparator unit (7; 27; 37) for comparison with the currently detected signal frequency on the monitored signal transmission line (3; 23; 33).

5. Apparatus according to claim 2,
characterised in that
the communication of data between the sensor device (1; 21) and the evaluation unit (2; 22) is achieved in the programming mode via a data line (24) which can be operated bidirectionally in this operating mode.

6. Apparatus according to claim 2,
characterised in that
• in the measuring mode, both signal transmission lines (3, 4) can be operated unidirectionally, transmission of specific timing signals from the evaluation unit (2) to the sensor device (1) being effected on a timing line (3) and transmission of measuring data from the sensor device (1) to the evaluation unit (2) being effected on a data line (4), whilst
• in the programming mode, writing-on or a readout of a memory component (6) is possible via the data line (4), which memory component is assigned to the sensor device (1).

7. Apparatus according to claim 1,
characterised in that
the sensor device comprises a signal processing stage (36) which converts analogue signals into digital output signals and has a switching means (38) which enables switching between different measuring modes, one of which provides transmission of the analogue signals to the subsequently assigned processing unit (32) whilst the other provides transmission of the digital output signals produced by the signal processing stage (36) to the subsequently assigned processing unit.

8. Method for data transmission between a sensor device (1; 21; 31) and a processing unit (2; 22; 32) which are connected together by a plurality of signal transmission lines (3, 4; 23, 24; 33, 34), switching between different operating modes being possible via a comparator unit (7; 27; 37),
characterised in that
the comparator unit (7; 27; 37) monitors a signal transmission line (3; 23; 33) for this purpose, on which line timing signals from the processing unit (2; 22; 32) are transmitted in the direction of the sensor device (1; 21; 31) in order to synchronise data transmission to another signal transmission line (4; 24; 34), and a signal with a specific signal frequency is transmitted from the processing unit (2; 22; 32) as a switching signal into the desired other operating mode, which signal deviates from the frequency of the timing signals which are otherwise transmitted on this signal transmission line (3; 23; 33) and the comparator unit (7; 27; 37) identifies the operating mode which is preset by the recorded signal frequency via the continuous detection of the current signal frequency and by comparison with a reference signal, and activates switching means (8.1; 8.2; 28; 38) if switching into the other operating mode should result.

9. Method according to claim 8,
characterised in that
the first of the two operational modes is a measuring mode in which transmission of measuring data from the sensor device (1; 21) to the evaluation unit (2; 22) is effected and a second operating mode is a programming mode which makes possible writing-on and/or a readout of a memory component (6; 26) in the sensor device (1; 21).

10. Method according to claim 8,
characterised in that
the reference signal is produced via an oscillator stage (9; 29) in the sensor device (1; 21) and is supplied to the comparator unit (7; 27; 37) for comparison with the currently recorded signal frequency.

11. Method according to claim 9,
characterised in that
in the programming mode, signals are communicated between the sensor device (1; 21) and the evaluation unit (2; 22) via a data line (4; 24) which can be operated bidirectionally in this operating mode.

12. Method according to claim 8,
characterised in that
• in the measuring mode, both signal transmission lines (3, 4) are operated unidirectionally, specific timing signals being transmitted from the evaluation unit (2) to the sensor device (1) on a timing line (3) and measuring data being transmitted from the sensor device (1) to the evaluation unit (2) on a data line (4) whilst
• in the programming mode, a memory component (6) is written-on and/or read out via the data line (4), which memory component is assigned to the sensor device (1).

13. Method according to claim 8,
characterised in that
switching between at least two different measuring modes of the sensor device (31) is possible, analogue signals being transmitted in a first measuring mode to the subsequently assigned processing unit (32) from the sensor device (31) to the evaluation unit (32) and digital signals being transmitted in a second measuring mode to the subsequently assigned processing unit (32).

## Revendications

1. Dispositif pour la transmission de données entre un capteur de valeurs de mesure (1; 21; 31) et une unité de traitement (2; 22; 32) qui sont connectés l'un à l'autre par plusieurs lignes de transmission de signaux (3, 4; 23, 24; 33, 34), le dispositif comprenant en outre une unité comparateur (7; 27; 37) qui permet une commutation entre différents modes de fonctionnement,
caractérisé par le fait que
l'unité comparateur (7; 27; 37), à cet effet, surveille une ligne de transmission de signal (3; 23; 33) sur laquelle a lieu une transmission de signaux d'horloge de l'unité de traitement (2; 22; 32) vers le capteur de valeurs de mesure (1; 21; 31), aux fins de synchroniser une transmission de données sur une autre ligne de transmission de signal (4; 24; 34), que l'on utilise comme signal de commutation vers l'autre mode de fonctionnement souhaité, un signal de fréquence donnée transmis par l'unité de traitement (2; 22; 32), dont la fréquence diffère de celle des signaux d'horloge normalement transmis sur la ligne de transmission de signal (3; 23; 33) surveillée, que l'unité comparateur (7; 27; 37) est agencée de telle sorte qu'il y ait, par le biais de la mesure en continu de la fréquence de signal actuelle sur la ligne de transmission de signal (3; 23; 33) surveillée et de la comparaison à un signal de référence, une identification du mode de fonctionnement imposé par la fréquence de signal enregistrée et qu'il est prévu des moyens de commutation (8.1, 8.2; 28; 38) qui peuvent être activés par l'unité comparateur (7; 27; 37) et par l'intermédiaire desquels une commutation dans l'autre mode de fonctionnement est opérée.

2. Dispositif selon la revendication 1, caractérisé par le fait que le capteur de valeurs de mesure (1; 21) peut être exploité de manière sélective dans au moins deux modes de fonctionnement, parmi lesquels se trouvent au moins un mode de mesure et au moins un mode de programmation, qui permet une écriture et une lecture de zones de mémoire (6.1, 6.2, 6.3; 26.1, 26.2, 26.3) d'un module de mémoire (6; 26) associé au capteur de valeur de mesure (1; 21).

3. Dispositif selon la revendication 2, caractérisé par le fait qu'il est prévu des moyens de commutation (8.1, 8.2; 28) connectés à l'unité de comparateur (7; 27) qui peuvent être activés en fonction du mode de fonctionnement identifié aux fins soit d'écrire et/ou lire des zones de mémoire (6.1,6.2,6.3; 26.1, 26.2, 26.3) d'un module de mémoire (6; 26) associé au capteur de valeur de mesure (1; 21), soit de transmettre des données de mesure du capteur de valeurs de mesure(1; 21) vers l'unité de traitement (2; 22).

4. Dispositif selon la revendication 1, caractérisé par le fait qu'un étage oscillateur (9; 29) est disposé dans le capteur de valeurs de mesure (1, 21), lequel étage oscillateur produit un signal de référence qui est envoyé à l'unité comparateur (7; 27; 37) à des fins de comparaison avec la fréquence de signal actuellement mesurée sur la ligne de transmission de signaux (3; 23; 33) surveillée.

5. Dispositif selon la revendication 2, caractérisé par le fait que la transmission de données entre le capteur de valeurs de mesure (1; 21) et l'unité de traitement (2; 22), en mode programmation, a lieu via une ligne de données (24) qui travaille en mode bidirectionnel dans ce mode de fonctionnement.

6. Dispositif selon la revendication 2, caractérisé par le fait
- qu'en mode mesure, les deux lignes de transmission de signaux (3, 4) travaillent en mode unidirectionnel, une transmission de signaux d'horloge définis, de l'unité de traitement (2) vers le capteur de valeurs de mesure (1), ayant lieu sur une ligne de synchronisation (3) et une transmission de données de mesure, du capteur de valeurs de mesure (1) vers l'unité de traitement (2), ayant lieu sur une ligne de données (4), tandis
- qu'en mode programmation, une écriture et/ou lecture d'un module de mémoire (6) associé au capteur de valeurs de mesure (1) est possible via la ligne de données (4).

7. Dispositif selon la revendication 1, caractérisé par le fait que le capteur de valeurs de mesure comprend un étage de traitement de signal (36), qui convertit des signaux analogiques en des signaux de sortie numériques et qui comporte des moyens de commutation (38) permettant une commutation entre différents modes, parmi lesquels l'un assure une transmission des signaux analogiques vers l'unité de traitement (32) tandis que l'autre assure une transmission des signaux de sortie numériques produits par l'étage de traitement de signal (36) vers l'unité de traitement placée en aval.

8. Procédé pour la transmission de données entre un capteur de valeurs de mesure (1; 21; 31) et une unité de traitement (2; 22; 32) qui sont connectés l'un à l'autre par plusieurs lignes de transmission de signaux (3, 4; 23, 24; 33, 34), une commutation entre différents modes de fonctionnement étant possible via une unité comparateur (7; 27; 37),
caractérisé par le fait que
l'unité de comparateur (7; 27; 37,) à cet effet, surveille une ligne de transmission de signal (3; 23; 33) sur laquelle des signaux d'horloge sont transmis de l'unité de traitement (2; 22; 32) vers le capteur de valeurs de mesure (1; 21; 31), aux fins de synchroniser une transmission de données sur une autre ligne de transmission de signal (4; 24; 34), que l'on utilise comme signal de commutation vers l'autre mode de fonctionnement souhaité un signal de fréquence donnée transmis par l'unité de traitement (2; 22; 32), dont la fréquence diffère de celle des signaux d'horloge normalement transmis sur la ligne de transmission de signal (3; 23; 33) surveillée, que l'unité comparateur (7; 27; 37) identifie par le biais de la mesure en continu de la fréquence de signal actuelle sur la ligne de transmission de signal (3; 23; 33) surveillée et de la comparaison à un signal de référence, le mode de fonctionnement imposé par la fréquence de signal enregistrée et que des moyens de commutation (8.1, 8.2; 28; 38) sont activés lorsqu'une commutation dans l'autre mode de fonctionnement doit avoir lieu.

9. Procédé selon la revendication 8, caractérisé par le fait qu'un premier mode, parmi les deux modes de fonctionnement est un mode de mesure au cours duquel une transmission de données de mesure a lieu du capteur de valeurs de mesure (1; 21) vers l'unité de traitement (2; 22) et qu'un second mode de fonctionnement est un mode de programmation qui permet une écriture et/ou lecture d'un module de mémoire (6; 26) dans le capteur de valeurs de mesure (1; 21).

10. Procédé selon la revendication 8, caractérisé par le fait qu'un signal de référence qui est envoyé à l'unité comparateur (7; 27; 37) à des fins de comparaison avec la fréquence de signal actuellement mesurée est produit par un étage oscillateur (9; 29) disposé dans le capteur de valeurs de mesure

11. Procédé selon la revendication 9, caractérisé par le fait qu'en mode programmation des signaux sont transmis entre le capteur de valeurs de mesure (1; 21) et l'unité de traitement (2; 22), via une ligne de données (24) travaillant en mode bidirectionnel.

12. Procédé selon la revendication 8, caractérisé par le fait
- qu'en mode mesure, les deux lignes de transmission de signaux (3, 4) travaillent en mode unidirectionnel, des signaux d'horloge définis étant transmis de l'unité de traitement (2) vers le capteur de valeurs de mesure (1) sur une ligne de synchronisation (3) et des données de mesure étant transmises du capteur de valeurs de mesure (1) vers l'unité de traitement (2) sur une ligne de données (4), tandis
- qu'en mode programmation, des valeurs sont écrites et/ou lues via la ligne de données (4) dans un module de mémoire (6) associé au capteur.

13. Procédé selon la revendication 8, caractérisé par le fait qu'une commutation entre au moins deux modes de mesure du capteur de valeurs de mesure (31) est possible, dans un premier mode de mesure, des signaux analogiques étant transmis du capteur de valeurs de mesure (31) vers l'unité de traitement (32) et, dans le deuxième mode de mesure, des signaux numériques produits étant transmis à l'unité de traitement (32).
